# EUROPEAN PATENT APPLICATION

(11) **EP 4 332 580 A1**
(43) Date of publication of application: **06.03.2024**
(21) Application number: 22795419.5
(22) Date of filing: 25.03.2022
(51) Int. Cl.: G01N 35/00

(54) **AUTOMATED ANALYSIS DEVICE**

(30) Priority: 27.04.2021 JP 2021074770
(71) Applicant: HITACHI HIGH-TECH CORPORATION, Tokyo 105-6409 (JP)
(72) Inventor: TAKAHASHI, Takuya, Tokyo 105-6409 (JP); SAKATA, Kenshiro, Tokyo 105-6409 (JP); KABE, Yoshihiro, Tokyo 105-6409 (JP)
(74) Representative: Strehl Schübel-Hopf & Partner
(86) International application number: PCT/JP2022/014527
(87) International publication number: WO 2022/230502

(57) **Abstract**

To provide an automatic analyzer having a reagent carrying mechanism capable of reducing a burden on an operator, which can reduce degradation in throughput of the device and an installation area to be smaller compared to the related art. The automatic analyzer includes a plurality of reagent dispensing mechanisms 7, 8, 9, and 10 that dispense a reagent from a reagent bottle 12 into a reaction container 2; a plurality of reagent disks 11A and 11B that store the reagent bottles 12; reagent carrying-in positions 31A and 31B provided in the respective reagent disks 11A and 11B to put in the reagent bottles 12 to the respective reagent disks 11A and 11B; and a carrying mechanism that carries the reagent bottles 12 between the respective reagent carrying-in positions 31A and 31B and a reagent bottle gripping position 43a, in which when an automatic analyzer 100 is viewed from a vertically upper side, the reagent bottle gripping position 43a is positioned between the reagent carrying-in positions 31A and 31B on a device front side of the automatic analyzer 100.

## Description

### Technical Field

The present invention relates to an automatic analyzer that analyzes a concentration or the like of a predetermined component in a sample such as blood or urine (hereinafter, referred to as a sample), and more particularly to an automatic analyzer capable of automatically carrying in and out a reagent used for analysis.

### Background Art

As an example of an automatic analyzer including a mechanism capable of changing a carrying direction of a container, PTL 1 discloses that a reagent holding unit of the automatic analyzer includes a first reagent disk holding a reagent container, a reagent information reading mechanism reading information attached to an RFID tag of the reagent container on the first reagent disk, and a reagent discharge mechanism capable of changing a carrying direction of a reagent when the reagent container is desired to be taken out after RFID tag information attached to the reagent container is read by the reagent information reading mechanism.

PTL 2 discloses that an analyzer system for extracorporeal diagnosis includes a specimen handler module having a robot arm that transfers a specimen from a drawer to a carrier on a linear synchronous motor automated track, the specimen is delivered to an individual track section associated with an individual analyzer module through the automated track, and the analyzer module directly aspirates a part of the specimen from a specimen carrier and performs analysis thereon.

### Citation List

### Patent Literature

PTL 1: JP2012-112912A
PTL 2: JP2019-521359T

### Summary of Invention

### Technical Problem

An automatic analyzer that performs quantitative or qualitative analysis of a specific component contained in a sample has many advantages such as reproducibility of an analysis result and a high processing speed, and is indispensable for diagnosis in recent years.

In recent years, the automatic analyzer is required to reduce an installation area as much as possible while maintaining high throughput, and further reduce a burden on an operator.

Here, in a device having high throughput, a plurality of reagent disks are installed in an analysis unit, and a plurality of dispensing mechanisms operate to perform analysis. In the device having such a configuration, since a consumption amount of a reagent is large, a reagent bottle is frequently registered and replaced. Since the registration and replacement work imposes a heavy burden on the operator, it is proposed to provide an automatic analyzer with a reagent carry-in-and-out mechanism that allows the device to automatically perform reagent registration and replacement.

For example, PTL 1 discloses that a reagent holding unit is installed adjacent to an analysis unit as a unit separate from the automatic analyzer, and the reagent bottle is carried out to an analysis unit side by the reagent discharge mechanism capable of changing the carrying direction of the reagent after the RFID tag information is read by the reagent information reading mechanism. In PTL 1, two reagent disks are installed side by side in the analysis unit, the reagent bottle is gripped by a reagent carrying mechanism and passes through a vicinity of a center of the two reagent disks, and the reagent carrying mechanism carries the reagent bottle discharged from the reagent discharge mechanism to a predetermined reagent disk by a movement in an X direction or an X-Y direction.

In PTL 2, the reagent carrying mechanism is installed on a right side surface of the analysis unit, and carries the reagent bottle by a linear motion in a Y direction on a straight line connecting a reagent gripping position in front of the analysis unit and two reagent disks vertically arranged in the analysis unit, and a reagent carrying-in position on the reagent disk is set on a carrying track of the reagent carrying mechanism.

As described above, an automatic analyzer in recent years is required to reduce an installation area as much as possible while maintaining high throughput and reduce a burden on an operator.

Therefore, a plurality of reagent disks are provided, and the reagent carrying mechanism carries the reagent bottle across the plurality of reagent disks. In such a configuration, a waiting time may occur in the reagent disks and respective dispensing mechanisms in order to avoid interference of the mechanisms during carrying, and the throughput may decrease.

For example, in PTL 1 described above, since the reagent holding unit is provided separately from the analysis unit, the installation area of the device is increased. Further, since the reagent carrying mechanism passes through the vicinity of the center of the reagent disks, when carrying the reagent bottle, it is necessary to carry the reagent bottle after stopping the dispensing mechanism installed in the analysis unit and securing a path through which the reagent carrying mechanism can pass, and therefore, there is room for improvement since a waiting time of the dispensing mechanism is long for carry-in and carry-out.

In addition, in PTL 2, since the reagent carrying mechanism is installed on the right side surface in the analysis unit where interference with the dispensing mechanism does not occur, although there is no waiting time as in PTL 1, the installation area of the device may be increased. Further, since carrying distances from the reagent gripping position to the two reagent disks are different, a carrying time may be long when carrying to the reagent disk on a long distance side (a back side of the analysis unit). In particular, the waiting time may be long when a bias in a putting-in request of a reagent occurs, and thus the throughput may be reduced.

The invention has been made to solve the above problems, and provides an automatic analyzer having a reagent carrying mechanism that reduces a burden on an operator, which can reduce degradation in throughput of the device and an installation area to be smaller compared to that in the related art.

### Solution to Problem

The invention includes a plurality of methods for solving the above problems, and an example thereof is an automatic analyzer of dispensing a sample and a reagent into a reaction container to measure a mixed liquid reacted and blended, and the automatic analyzer includes: a plurality of reagent dispensing mechanisms that dispense the reagent from a reagent bottle into the reaction container; a plurality of reagent disks that store the reagent bottles; putting-in portions provided in the respective reagent disks to put in the reagent bottle to the respective reagent disks; and a carrying mechanism that carries the reagent bottle between the respective putting-in portions and a reagent carrying position, wherein when the automatic analyzer is viewed from a vertically upper side, the reagent carrying position is positioned between the putting-in portions on a device front side of the automatic analyzer.

### Advantageous Effects of Invention

According to the invention, it is possible to reduce a burden on an operator while reducing degradation in throughput of the device and an installation area to be smaller as compared with that in the related art. Problems, configurations, and effects other than those described above will be further clarified with the following description of embodiments.

### Brief Description of Drawings

[Fig. 1] Fig. 1 is a schematic view showing a configuration and an operation area of an automatic analyzer according to a first embodiment of the invention.
[Fig. 2] Fig. 2 is a schematic view of a shutter mechanism according to the automatic analyzer of the first embodiment.
[Fig. 3] Fig. 3 is a view showing one example of the outline of a reagent bottle according to the automatic analyzer of the first embodiment.
[Fig. 4] Fig. 4 is a schematic view showing a front elevation of a reagent holding unit according to the automatic analyzer of the first embodiment.
[Fig. 5] Fig. 5 is a schematic view showing a side elevation of the reagent holding unit according to the automatic analyzer of the first embodiment.
[Fig. 6] Fig. 6 is a view showing a positional relation between a reagent dispensing mechanism and a shutter mechanism at a reagent aspiration time according to the automatic analyzer of the first embodiment.
[Fig. 7] Fig. 7 is a view showing a positional relation between the reagent dispensing mechanism and the shutter mechanism at the reagent aspiration time according to the automatic analyzer of the first embodiment.
[Fig. 8] Fig. 8 is a schematic view for use in describing a setting position of the reagent dispensing mechanism and the reagent gripping position according to the automatic analyzer of the first embodiment.
[Fig. 9] Fig. 9 is a side elevation of a gripper mechanism and a piercing mechanism according to the automatic analyzer of the first embodiment.
[Fig. 10] Fig. 10 is one example of a flow chart when a reagent bottle is carried in according to the automatic analyzer of the first embodiment.
[Fig. 11] Fig. 11 is one example of a flow chart when a reagent bottle is carried out according to the automatic analyzer of the first embodiment.
[Fig. 12] Fig. 12 is a schematic view showing a structure of an automatic analyzer according to a second embodiment of the invention.
[Fig. 13] Fig. 13 is a schematic view showing a structure of an automatic analyzer according to a third embodiment of the invention.
[Fig. 14] Fig. 14 is a schematic view showing a structure of an automatic analyzer according to a fourth embodiment of the invention.

### Description of Embodiments

Hereinafter, embodiments of an automatic analyzer of the invention will be described with reference to the drawings. In the drawings used in the description, the same or corresponding components are denoted by the same or similar reference signs, and repeated descriptions of these components may be omitted.

### <First Embodiment>

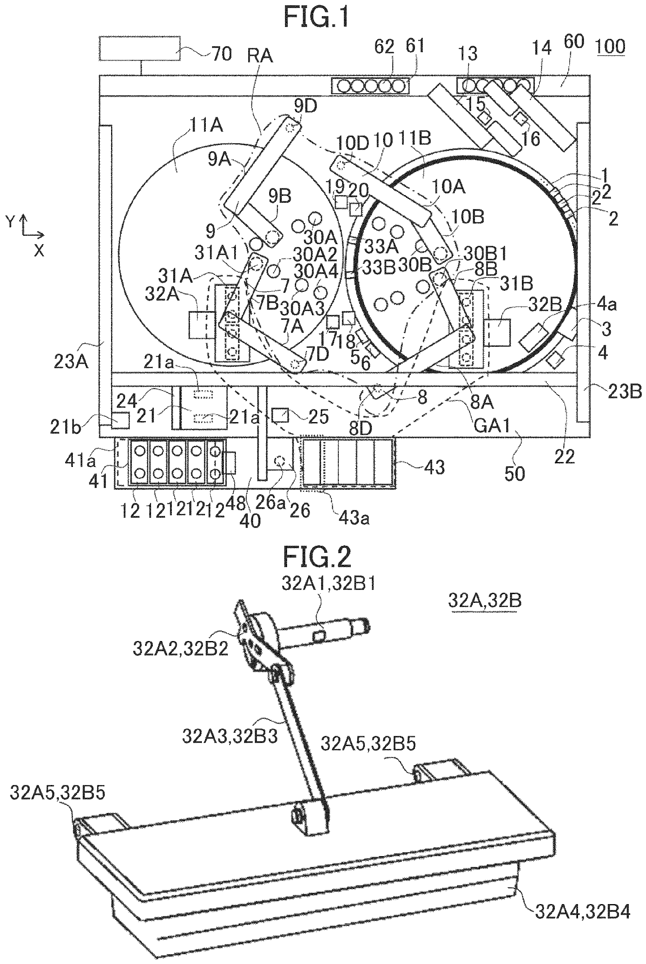

A first embodiment of an automatic analyzer of the invention will be described with reference to Figs. 1 to 11.

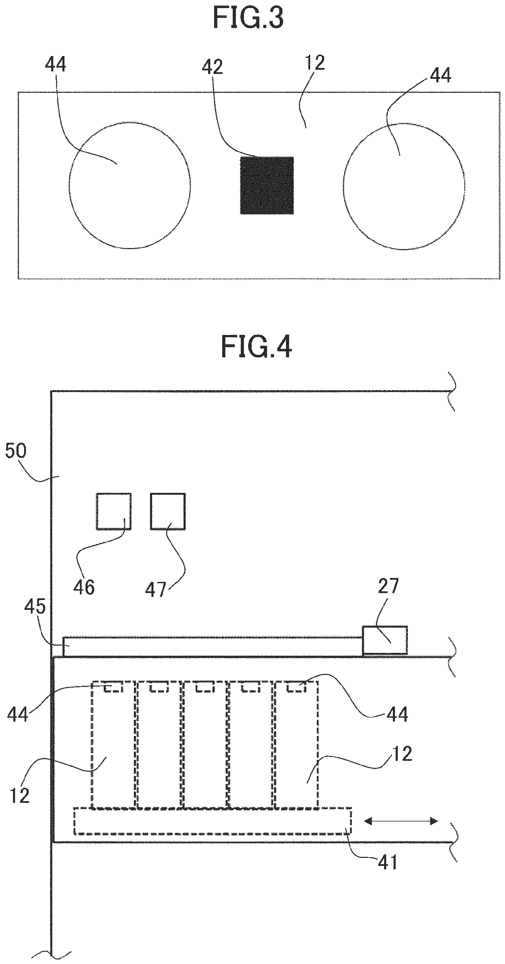

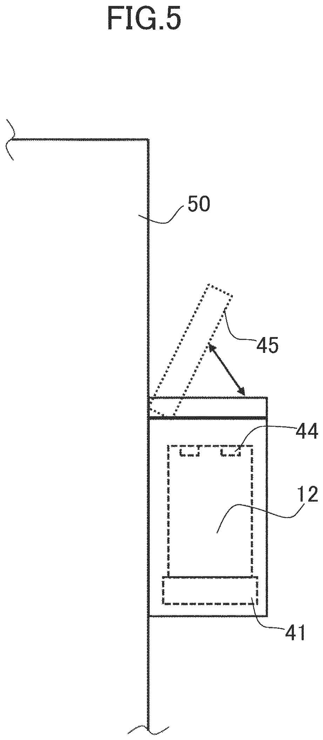

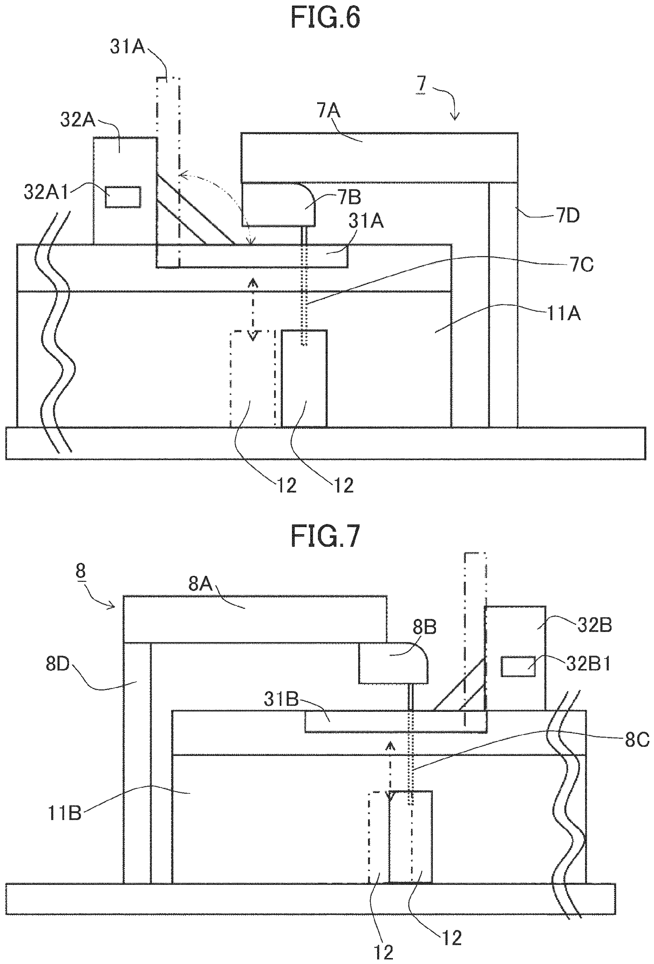

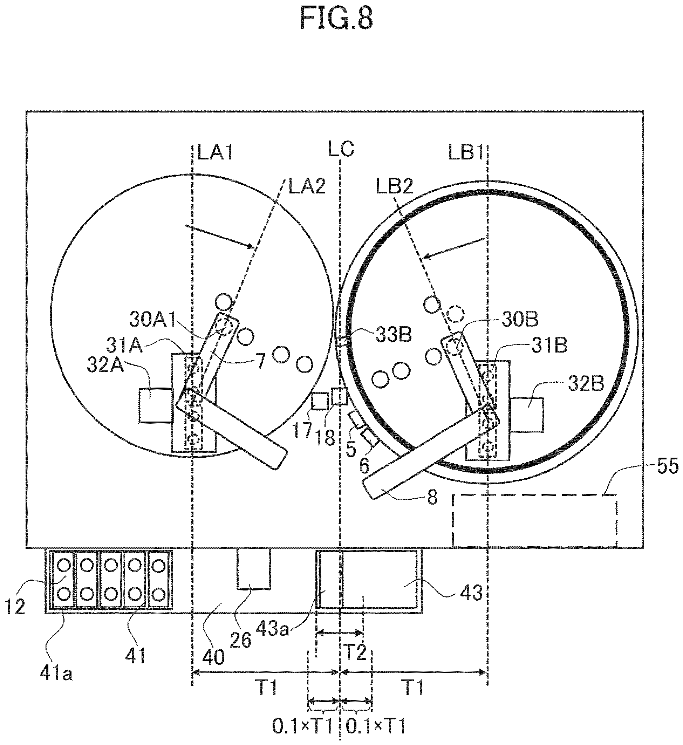

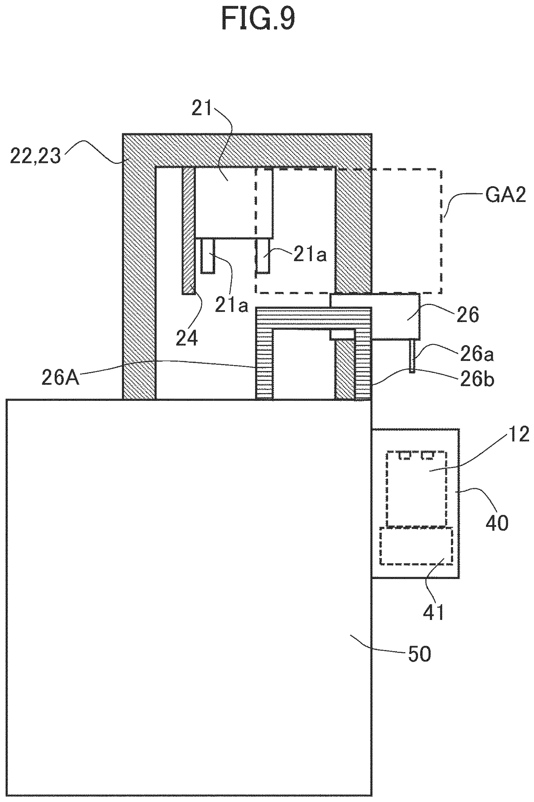

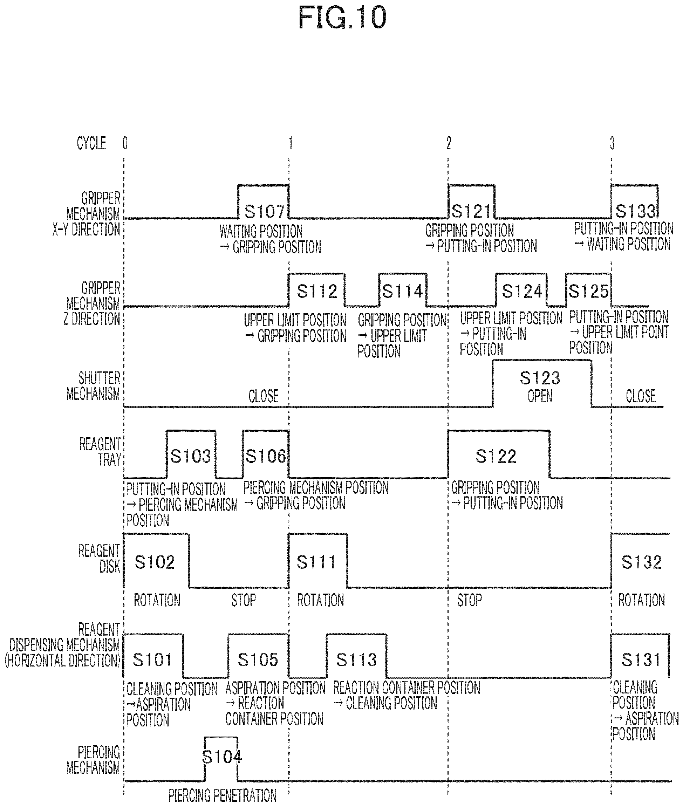

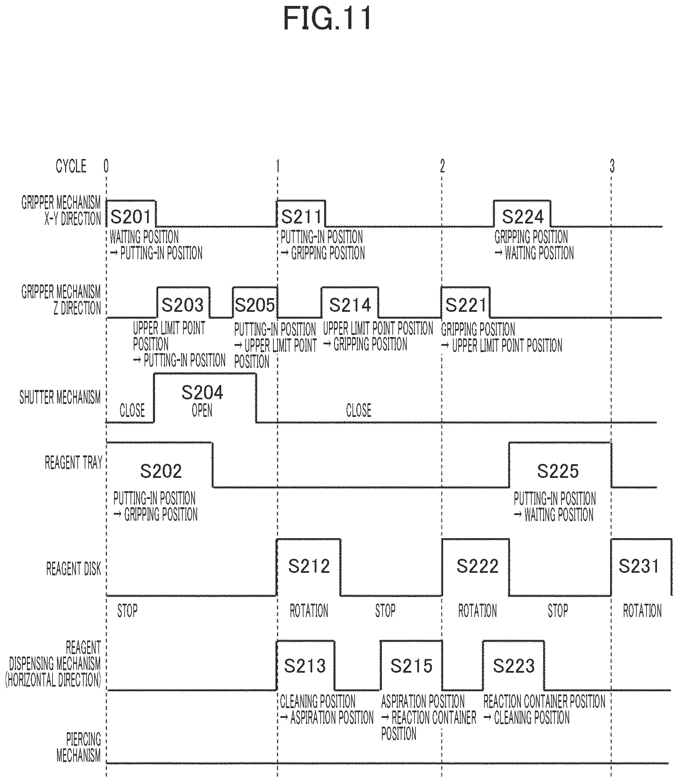

Fig. 1 is a schematic view showing a configuration and an operation area of the automatic analyzer according to the embodiment. Fig. 2 is a schematic view of a shutter mechanism. Fig. 3 is a view showing one example of an outline of a reagent bottle. Fig. 4 is a front elevation of a reagent holding unit, and Fig. 5 is a schematic view showing a side elevation of the reagent holding unit. Figs. 6 and 7 are diagrams showing positional relations between a reagent dispensing mechanism and a shutter mechanism during reagent aspiration. Fig. 8 is a schematic view for use in describing a setting position of the reagent dispensing mechanism and the reagent gripping position. Fig. 9 is a side elevation of a gripper mechanism and a piercing mechanism. Fig. 10 is one example of a flowchart when a reagent bottle is carried in, and Fig. 11 is one example of a flowchart when the reagent bottle is carried out.

In the drawings used in the description, the same or corresponding components are denoted by the same or similar reference signs, and repeated description of these components may be omitted.

First, an overall configuration of the automatic analyzer and a structure of each mechanism will be described with reference to Figs. 1 to 5.

An automatic analyzer 100 shown in FIG. 1 is a device that measures a mixed liquid prepared by dispensing a sample and a reagent into reaction containers 2 and allows the sample and the reagent to react, and includes a reaction disk 1, a sample carrying mechanism 60, sample dispensing mechanisms 13 and 14, reagent disks 11A and 11B, reagent dispensing mechanisms 7, 8, 9, and 10, a cleaning mechanism 3, a light source 4a, a spectrophotometer 4, stirring mechanisms 5 and 6, cleaning tanks 15, 16, 17, 18, 19, and 20, a reagent holding unit 40, a gripper mechanism 21, a piercing mechanism 26, a controller 70, and the like.

The reaction containers 2 are arranged on a circumference of the reaction disk 1. The sample carrying mechanism 60 that moves a rack 61 on which a sample container 62 is placed is installed near the reaction disk 1. A sample is held in the sample container 62, placed on a rack 61, and carried by the sample carrying mechanism 60.

The sample carrying mechanism 60 carries the rack 61 from a sample installation position, a pretreatment device (not shown), or the like to the vicinity of the reaction disk 1, and carries the rack 61 holding the dispensed sample to a waiting position or another analyzer.

The sample dispensing mechanisms 13 and 14 which are rotatable and movable in an up-down direction are installed between the reaction disk 1 and the sample carrying mechanism 60, each provided with a dispensing probe (not shown for convenience). A sample pump (not shown) is connected to the dispensing probe through a syringe. The dispensing probe moves while drawing an arc around a rotation axis to dispense a sample from the sample container 62 to the reaction container 2.

The reagent disks 11A and 11B have a structure in which a plurality of reagent bottles 12 containing reagents can be stored on circumferences thereof. In particular, in the embodiment, as shown in Fig. 1, the plurality of reagent bottles 12 can be stored on an inner periphery and an outer periphery, respectively. The reagent disks 11A and 11B are cooled and covered with a cover provided with aspiration ports (not shown) provided at reagent aspiration positions 30A and 30B.

In the embodiment, among the reagent disks 11A and 11B arranged side by side in a device longitudinal direction on a device front side of the automatic analyzer 100, the reagent disk 11B is arranged on an inner peripheral side of the reaction disk 1.

The "device front side" is a surface to be accessible by an operator, and means, for example, a surface on a side where another device or the like is not arranged, or a surface on a side not in contact with a wall surface defining a space in which the corresponding automatic analyzer 100 is installed.

The number of reagent disks is not limited to two, and may be three or more.

The covers of the reagent disks 11A and 11B are provided with reagent carrying-in positions 31A and 31B which are openings for carrying in or carrying out the reagent bottles 12 to or from inside of the respective reagent disks 11A and 11B. The reagent carrying-in positions 31A and 31B are common openings that can be installed in two rows in a longitudinal direction of the inner periphery and the outer periphery of the reagent disks 11A and 11B, and in both cases of installation on the inner periphery and installation on the outer periphery, carry-in and carry-out can be performed from the same reagent carrying-in positions 31A and 31B.

Since the reagent disks 11A and 11B are cooled as described above, shutter mechanisms 32A and 32B are provided at the reagent carrying-in positions 31A and 31B such that cold air does not leak from the reagent carrying-in positions 31A and 31B.

As shown in Fig. 2, the shutter mechanisms 32A and 32B are provided with shutter mechanism driving motors 32A1 and 32B1, first joint members 32A2 and 32B2, second joint members 32A3 and 32B3, lids 32A4 and 32B4, and shafts 32A5 and 32B5, which are arranged on an end portion side of a box 50 with respect to the reagent carrying-in positions 31A and 31B.

In the shutter mechanisms 32A and 32B, the shutter mechanism driving motors 32A1 and 32B1 are driven to rotate when the reagent is carried in or when the reagent is carried out, the lids 32A4 and 32B4 closing the reagent carrying-in positions 31A and 31B through the first joint members 32A2 and 32B2 and the second joint members 32A3 and 32B3 are automatically opened with the shafts 32A5 and 32B5 as fulcrums, and the reagent bottles 12 can be carried in and carried out by the gripper mechanism 21.

The reagent dispensing mechanisms 7, 8, 9, and 10 which are rotatable and movable in the up-down direction are installed between the reaction disk 1 and the reagent disks 11A and 11B, and include first arms 7A and 8A having first rotation shafts 7D, 8D, 9D, and 10D (see Figs. 6 and 7), second arms 7B and 8B having second rotation shafts provided on the first arms 7A and 8A, dispensing probes 7C and 8C, and the like. A reagent pump (not shown) is connected to the dispensing probes 7C and 8C through a syringe.

The dispensing probes 7C and 8C move around the first rotation shafts 7D, 8D, 9D, and 10D and the second rotation shafts while drawing an arc, access the reagent bottles 12 in the reagent disks 11A and 11B at the reagent aspiration positions 30A and 30B, and dispense the reagent from the reagent bottles 12 to the reaction containers 2 positioned at reagent discharging positions 33A and 33B.

The cleaning mechanism 3, the light source 4a, the spectrophotometer 4, and the stirring mechanisms 5 and 6 are arranged around the reaction disk 1. A cleaning pump (not shown) is connected to the cleaning mechanism 3 that cleans the used reaction container 2.

The cleaning tanks 17, 18, 19, and 20 are installed in operation ranges of the reagent dispensing mechanisms 7, 8, 9, and 10, respectively. In addition, the cleaning tanks 15 and 16, a drying mechanism, and a special cleaning tank (not shown) are installed in each of operation trajectories of the sample dispensing mechanisms 13 and 14. The special cleaning tank or the drying mechanism may be installed in operation trajectories of the reagent dispensing mechanisms 7, 8, 9, and 10. A cleaning tank (not shown) is installed in each of operation trajectories of the stirring mechanisms 5 and 6.

The controller 70 is implemented by a computer or the like, is connected to mechanisms in the automatic analyzer 100 including the reagent dispensing mechanisms 7, 8, 9, and 10, the reagent holding unit 40, and the gripper mechanism 21, controls operations of the mechanisms, and performs calculation processing to obtain a concentration of a predetermined component in a sample.

The overall configuration of the automatic analyzer 100 in the embodiment is described above.

The configuration of the automatic analyzer 100 is not limited to a case of a biochemical analyzer that analyzes biochemical analysis items as shown in Fig. 1, and can be an analyzer that analyzes other analysis items, such as an immune analyzer that analyzes immune analysis items. Further, a form of the biochemical analyzer is not limited to that shown in Fig. 1, and an analysis device that measures other analysis items, for example, an electrolyte, can be separately mounted.

The automatic analyzer 100 is not limited to a single analysis module configuration as shown in Fig. 1, and a configuration can be used in which two or more analysis modules capable of measuring various identical or different analysis items or pretreatment modules for performing pretreatment are connected by a sample carrying mechanism.

Analysis processing on a sample performed by the automatic analyzer 100 as described above is generally executed according to the following procedure.

First, a sample in the sample container 62 placed on the rack 61 carried to the vicinity of the reaction disk 1 by the sample carrying mechanism 60 is dispensed by sample dispensing probes of the sample dispensing mechanisms 13 and 14 into the reaction container 2 on the reaction disk 1. Next, a reagent used for the analysis is dispensed from the reagent bottles 12 on the reagent disks 11A and 11B into the reaction container 2, into which the sample is dispensed early, by the dispensing probes 7C and 8C of the reagent dispensing mechanisms 7, 8, 9, and 10. Subsequently, a mixed liquid of the sample and the reagent in the reaction container 2 is stirred by the stirring mechanisms 5 and 6.

Then, light generated from the light source 4a is transmitted through the reaction container 2 containing the mixed liquid after stirring, and a luminous intensity of the transmitted light is measured by the spectrophotometer 4. The luminous intensity measured by the spectrophotometer 4 is transmitted to the controller 70 through an A/D converter and an interface. Then, calculation is performed by the controller 70 to obtain a concentration of a predetermined component in a sample, and a result thereof is displayed on a display unit (not shown) or stored in a storage unit (not shown).

Next, configurations of the reagent holding unit 40, the gripper mechanism 21, the piercing mechanism 26, and the like for automatically carrying in the reagent bottles 12 before use into the reagent disks 11A and 11B and for carrying out the reagent bottles 12 after use from the reagent disks 11A and 11B will be described with reference to Fig. 3 and subsequent drawings.

As shown in Fig. 3, since lids 44 are attached to aspiration port positions of the reagent bottles 12 in order to seal the inside, a method of performing opening processing of making a notch-shaped hole in the lid 44 by piercing, inserting the dispensing probes 7C and 8C into notch portions, and aspirating the reagent in the reagent bottles 12 may be used. In the method, an opening of the lid 44 can be a slight notch. Therefore, since contact between the reagent and outside air can be reduced, there is an advantage that deterioration of the reagent can be reduced.

In the configuration, when the operator places a new unopened reagent bottle 12 at a reagent putting-in position 41a of the automatic analyzer 100, since the holes are made in the lids 44 of the reagent bottle 12 and the reagent bottle 12 is automatically installed in the reagent disks 11A and 11B, the burden on the operator can be greatly reduced. The reagent holding unit 40 is a mechanism of automatically carrying in and carrying out the reagent bottle 12 to and from the reagent disks 11A and 11B regardless of whether the lid 44 is removed or the lid 44 is opened.

The reagent holding unit 40 is biased to a most negative direction side of an X direction among end portions on a device front side of the box 50 of the automatic analyzer 100 (a most negative direction of the Y direction in Fig. 1), and has a reagent carrying tray 41 and the like. In the reagent holding unit 40, the reagent putting-in position 41a for the operator to put in the reagent bottle 12 is set at a most negative direction of the X direction in the reagent holding unit 40, and a reagent carrying tray moving position 43 is set at a most positive direction in the X direction in the reagent holding unit 40.

As shown in Fig. 1, in the embodiment, it is assumed that the X direction is a longitudinal direction of the box 50 of the automatic analyzer 100, the Y direction is orthogonal to the X direction and is a short direction of the box 50, the Z direction is a vertical direction with respect to the X direction and the Y direction, a ground side is defined as a negative direction, and a sky side is defined as a positive direction.

The reagent carrying tray 41 is a mechanism that carries the reagent bottle 12 along an arrangement direction of the plurality of reagent disks 11A and 11B between the reagent putting-in position 41a and a reagent bottle gripping position 43a, and is movable in the X direction in Fig. 1 in the reagent holding unit 40 biased to a most negative side of the Y direction in Fig. 1, which is on the front side of the device, and includes, for example, a rail, a wheel, and a motor.

Fig. 4 shows a front elevation of the reagent holding unit 40, and Fig. 5 shows a side elevation of the reagent holding unit 40. As shown in Figs. 1 and 4, a plurality of reagent installation positions (five positions in the embodiment) are formed in the reagent carrying tray 41 such that the plurality of reagent bottles 12 can be installed at once when the reagent is put in and carried out.

The reagent holding unit 40 is provided with an RFID tag reader 48, a reagent carrying mechanism cover 45, a cover opening and closing motor 27, a reagent load button 46, and a reagent unload button 47.

The RFID tag reader 48 is a mechanism of reading information related to a reagent recorded in an RFID tag 42 provided in the reagent bottle 12 as shown in Fig. 3.

The reagent carrying mechanism cover 45 is a member for preventing the reagent putting-in position 41a from remaining open, and the cover opening and closing motor 27 for opening and closing the reagent carrying mechanism cover 45 is provided on a shaft of the reagent carrying mechanism cover 45. The reagent carrying mechanism cover 45 may be manually opened and closed without providing the cover opening and closing motor 27.

The reagent load button 46 and the reagent unload button 47 are buttons provided above the reagent putting-in position 41a of the reagent holding unit 40, and the reagent load button 46 is pressed when the reagent bottle 12 is carried in the reagent disk 11A or 11B, and the reagent unload button 47 is pressed when the reagent bottle 12 is carried out from the reagent disk 11A or 11B.

The gripper mechanism 21 includes gripping arms 21a, a driving motor 21b, and the like, and implements a carrying mechanism that carries the reagent bottle 12 between the respective reagent carrying-in positions 31A and 31B and the reagent bottle gripping position 43a.

In the embodiment, the gripper mechanism 21 is movable in the X direction, the Y direction, and the Z direction in Fig. 1 along an X-direction moving shaft 22, Y-direction moving shafts 23A and 23B, and a Z-direction moving shaft 24.

The X-direction moving shaft 22 is provided on the front side of the box 50, and includes rails and the like for moving the gripper mechanism 21 in the positive direction and the negative direction of the X direction.

The Y-direction moving shaft 23A is provided on an end portion side of the box 50 in the most negative direction of the X direction, and the Y-direction moving shaft 23B is provided on an end portion side of the box 50 in the most positive direction of the X direction, and includes rails and the like for moving the gripper mechanism 21 in the positive direction and the negative direction of the Y direction. In the embodiment, the driving motor 21b is arranged on a Y-direction moving shaft 23A side.

The Z-direction moving shaft 24 is provided at a position on the X-direction negative side of the gripper mechanism 21, and includes rails and the like for moving the gripper mechanism 21 in the positive direction and the negative direction of the Z direction.

In the automatic analyzer 100 shown in the embodiment, the reagent bottle 12 is installed at the reagent putting-in position 41a of the reagent holding unit 40, and is carried without rotating until being carried to the reagent bottle gripping position 43a by the reagent carrying tray 41 and until being carried from the reagent bottle gripping position 43a into each of the reagent disks 11A and 11B by the gripper mechanism 21. That is, the reagent bottle 12 is carried into the reagent disks 11A and 11B in an orientation in which the reagent bottle is installed at the reagent putting-in position 41a.

The piercing mechanism 26 is a mechanism arranged between the reagent putting-in position 41a and the reagent bottle gripping position 43a for opening the reagent bottle 12, and includes a pierce 26a for making a hole in the lid 44 of the reagent bottle 12, a motor for moving the pierce 26a in the Y direction and the Z direction in Fig. 1, and the like.

Instead of the piercing mechanism 26, a cap opening mechanism of rotating and opening a cap of the reagent bottle 12 may be provided. In addition, it is possible to adopt a configuration in which the operator opens and carries in the reagent bottle without providing the opening mechanism such as the piercing mechanism 26.

In such a reagent holding unit 40, when the reagent load button 46 is pressed, the reagent carrying tray 41 moves to the reagent putting-in position 41a. Thereafter, the cover opening and closing motor 27 is driven to automatically open the reagent carrying mechanism cover 45.

After installing the reagent bottle 12 at the reagent installation position provided on the reagent carrying tray 41, the operator presses the reagent load button 46 again. When the reagent load button 46 is pressed again, the cover opening and closing motor 27 is driven to close the reagent carrying mechanism cover 45. After the reagent carrying mechanism cover 45 is closed, the reagent carrying tray 41 automatically starts moving toward the reagent putting-in position 41a, and the reagent bottle 12 starts to be carried in the positive direction of the X direction in Fig. 1.

After the reagent bottle 12 starts to be carried, the reagent bottle is first carried below the RFID tag reader 48 in the reagent holding unit 40, and information of all the reagent bottles 12 mounted on the reagent carrying tray 41 is read by the RFID tag reader 48 to determine a type of the reagent. At this time, an installation orientation of the reagent bottle 12 can be determined.

After the type of the reagent is determined, the reagent bottle is further carried in the X-direction positive direction in Fig. 1 and carried below the piercing mechanism 26. Then, the piercing mechanism 26 makes a piercing hole in the lid 44 of the reagent bottle 12 in a cycle immediately before a put-in timing to the reagent disks 11A and 11B. After passing through the piercing hole, the piercing mechanism 26 is cleaned by a pierce cleaning tank 25.

After the piercing hole is formed, the reagent carrying tray 41 is carried to the reagent carrying tray moving position 43.

Thereafter, the reagent bottle 12 is gripped at the reagent bottle gripping position 43a of the reagent carrying tray moving position 43 by the gripper mechanism 21, and is carried to the reagent carrying-in position 31A to the reagent disk 11A or the reagent carrying-in position 31B to the reagent disk 11B.

When it is desired to take out the reagent bottle 12 in the reagent disks 11A and 11B, the shutter mechanisms 32A and 32B, the gripper mechanism 21, and the reagent carrying tray 41 are operated by pressing the reagent unload button 47, and the reagent bottle 12 is carried out in a flow reverse to the above-described procedure except for the opening by the piercing mechanism 26 and an information reading operation by the RFID tag reader 48.

Next, a layout of the reagent bottle gripping position 43a, the reagent carrying-in positions 31A and 31B, the reagent dispensing mechanisms 7, 8, 9, and 10, and the like in the automatic analyzer 100 in the embodiment will be described with reference to Fig. 6 and subsequent drawings.

As shown in Fig. 1, in the automatic analyzer 100 in the embodiment, when the automatic analyzer 100 is viewed from a vertically upper side, the reagent bottle gripping position 43a is positioned between the plurality of reagent carrying-in positions 31A and 31B on the device front side of the automatic analyzer 100 such that the reagent carrying tray moving position 43 and the respective reagent carrying-in positions 31A and 31B are at a distance as short as possible and at a distance close to each other in a range in which a difference does not occur in a movement cycle.

At the same time, in the automatic analyzer 100 in the embodiment, a position of the reagent bottle gripping position 43a in the longitudinal direction of the box 50 of the automatic analyzer 100 is between the plurality of reagent carrying-in positions 31A and 31B such that the reagent carrying tray moving position 43 and the respective reagent carrying-in positions 31A and 31B are at a distance as short as possible and at a distance close to each other in a range in which a difference does not occur in the movement cycle.

More specifically, as shown in Fig. 8, when the automatic analyzer 100 is viewed from the vertically upper side, when a distance from a middle line LC positioned between straight lines LA1 and LB1 passing through centers of the respective reagent disks 11A and 11B in parallel to the short direction (the Y direction) of the box 50 to the respective straight lines LA1 and LB1 is defined as a distance T1, a setting range T2 of the reagent bottle gripping position 43a can be arranged within a range in which a distance thereof from the middle line LC is 10% or less of the distance T1, that is, within a range in which a relationship of 0.2 × T1 ≥ T2 is satisfied. In this case, it is desirable that the middle line LC pass through a center of the setting range T2.

It is desirable that the positions of the reagent carrying-in positions 31A and 31B in the short direction be on the front side of the box 50 where the reagent carrying tray 41 is arranged, that is, in the Y-direction negative direction, in the respective reagent disks 11A and 11B.

An operation area RA of the reagent dispensing mechanisms 7, 8, 9, and 10 and a horizontal operation area GA1 of the gripper mechanism 21 are set with the reagent dispensing mechanisms 7, 8, 9, and 10, the respective cleaning tanks 17, 18, 19, and 20, the reagent aspiration positions 30, the reagent discharging positions 33A and 33B, the reagent carrying-in positions 31A and 31B, and the reagent carrying tray moving position 43 installed in the respective reagent disks so as not to cause interference in a horizontal plane.

First, in order to reduce the operation area RA of the reagent dispensing mechanisms 7, 8, 9, and 10, the respective reagent dispensing mechanisms 7, 8, 9, and 10 include the first arms 7A, 8A, 9A, and 10A and the second arms 7B, 8B, 9B, and 10B as described above.

Taking the reagent dispensing mechanism 7 as an example, in the reagent dispensing mechanism 7, the first arm 7A is driven to rotate about the first rotation shaft 7D, and the second arm 7B is driven to rotate in conjunction about a connection shaft (not shown) with the first arm 7A such that the reagent can be aspirated from any of the reagent aspiration positions 30A1, 30A2, 30A3, and 30A4 positioned from a most inner peripheral side of the reagent disk 11A. In this case, for example, as shown in Fig. 1, when the reagent dispensing mechanism 7 aspirates the reagent at a predetermined position, it is desirable that the reagent dispensing mechanism 7 is arranged such that the second arm 7B covers the reagent carrying-in position 31A, and the first arm 7A and the second arm 7B are rotationally driven. The same applies to the reagent dispensing mechanism 8.

When the reagent dispensing mechanism 7 aspirates the reagent at the predetermined position, when the second arm 7B is positioned on a reagent disk 11B side to perform the aspiration, it is necessary to perform adjustment to prevent interference with the second arm 8B and the like of the reagent dispensing mechanism 8, and thus it is desirable to implement the second arm 7B to cover the reagent carrying-in position 31A.

Similarly, it is desirable that the reagent dispensing mechanism 7 be able to discharge the reagent at any of the reagent discharging positions 33A and 33B without interfering with other reagent dispensing mechanisms 8, 9, and 10 and be able to perform cleaning in the cleaning tank 17, and that the first arm 7A and the second arm 7B be rotationally driven.

Here, taking Fig. 1 as an example, the reagent dispensing mechanism 7 most protrudes to a negative direction side of the X direction at a timing of aspirating the reagent at the reagent aspiration position 30A1 at the most inner peripheral side of the reagent dispensing mechanism 7. That is, during reagent aspiration, as shown in Fig. 6, the reagent dispensing mechanism 7 is closest to the shutter mechanism 32A when performing the aspiration operation to the reagent bottle 12.

In addition, the position of the shutter mechanism 32A, that is, the reagent carrying-in position 31A is provided on the device front side of the reagent disk 11A in order to reduce a movement distance of the gripper mechanism 21, and is set to a position where a distance to the device front side is shorter.

Due to the arrangement relationship, basically, the interference between the operation area RA of the reagent dispensing mechanisms 7, 8, 9, and 10 and the horizontal operation area GA1 of the gripper mechanism 21 is defined only by the arrangement of the reagent dispensing mechanisms 7 and 8 and the reagent aspiration positions 30A1 and 30B1 on the most inner peripheral side, and it can be said that it is not necessary to basically consider the interference for the reagent dispensing mechanisms 9 and 10 arranged on a rear side of the device.

Here, first, as shown in Fig. 8, it is desirable to set the second arm axes LA2 and LB2 of the second arms 7B and 8B at the reagent aspiration positions 30A and 30B so as to be normally located inside the straight lines LA1 and LB1 as described above.

Further, in order to reduce a range covered by the operation area RA, which is a trajectory of the reagent dispensing mechanisms 7, 8, 9, and 10, and the horizontal operation area GA1 of the gripper mechanism 21, it is desirable to draw the horizontal operation area GA1 of the gripper mechanism 21 to take a trajectory where physical interference does not occur other than an upper space of the respective reagent disks 11A and 11B.

More specifically, as shown in Fig. 1, in the horizontal operation area GA1, regarding accessing a reagent disk 11A side, the reagent bottle first moves in the Y-direction positive direction in Fig. 1 to avoid interference with the piercing mechanism 26, and then moves in the X-direction negative direction and the Y-direction positive direction to implement carrying at a shorter distance while avoiding interference with the reagent dispensing mechanism 7.

Regarding accessing a reagent disk 11B side, the reagent bottle first moves in the X-direction positive direction in Fig. 1 to avoid interference with the reagent dispensing mechanisms 7 and 8, and then moves in the X-direction positive direction and the Y-direction positive direction to implement carrying at a shorter distance while avoiding interference with the reagent dispensing mechanism 8.

In order to prevent interference with the shutter mechanisms 32A and 32B when the respective reagent dispensing mechanisms 7 and 8 installed on the front side of the box 50 perform a dispensing operation, the shutter mechanism 32A opens and closes in the X-direction negative direction in Fig. 1, and the shutter mechanism 32B opens and closes in the X-direction positive direction in Fig. 1.

That is, the shutter mechanism driving motor 32A1 is arranged in the X-direction negative direction in Fig. 1 from the reagent carrying-in position 31A and the lid 32A4, and the shutter mechanism driving motor 32B1 is arranged in the X-direction positive direction in Fig. 1 from the reagent carrying-in position 31B and the lid 32B4.

Further, at the reagent carrying-in positions 31A and 31B where the shutter mechanisms 32A and 32B are installed, the reagent bottles 12 can be installed in two rows in the longitudinal direction of the inner periphery and the outer periphery. Therefore, the orientation of the reagent bottle 12 may be a direction the same as that of the reagent bottle gripping position 43a regardless of the reagent disks 11A and 11B, and the reagent bottle 12 can be carried without rotation.

As shown in Fig. 9, when there is a mechanism such as the piercing mechanism 26 which is difficult to avoid interference at a horizontal position when accessing the reagent disk 11A, in order to avoid interference also in a height direction, it is desirable that the piercing mechanism 26 and the gripper mechanism 21 be arranged by setting heights of the respective mechanisms such that the reagent bottle 12 and the piercing mechanism 26 do not interfere with each other in the height direction in a state in which the gripper mechanism 21 holds the reagent bottle 12.

Taking Fig. 9 as an example, it is desirable that a height-direction operation area GA2 of the gripper mechanism 21 be set as an area in which interference does not occur even when the piercing mechanism 26 is positioned at an upper limit point, and the gripper mechanism 21 passes above the piercing mechanism 26 when the gripper mechanism 21 carries the reagent bottle 12 to and from the reagent carrying-in position 31A.

When the gripper mechanism 21 interferes with the operation of the reagent dispensing mechanism 7 or the reagent disk 11A when carrying in the reagent bottle 12 through the reagent carrying-in position 31A, it is desirable that the gripper mechanism 21 be set to move to a waiting position provided around the reagent carrying-in position 31A and wait, and move from the waiting position after the operation of the reagent dispensing mechanism 7 or the reagent disk 11A is stopped, and perform carry-in or carry-out of the reagent bottle 12.

That is, it is desirable to move the reagent bottle 12 to the waiting position while the reagent dispensing mechanisms 7 and 8 and the reagent disks 11A and 11B are being driven in a range where interference does not occur.

For example, when the carry-in of the reagent bottle 12 interferes with the operation of the reagent disk 11A, it is desirable that operation parameters be set such that, instead of gripping the reagent bottle 12 after the carry-in is possible, the gripper mechanism 21 grips the reagent bottle 12 at the reagent bottle gripping position 43a during the operation of the reagent disk 11A, moves to the waiting position provided around the reagent carrying-in position 31A and waits in a gripped state, and moves from the waiting position at a timing when the operation of the reagent disk 11A is stopped to quickly carry in the reagent bottle 12.

Similarly, when the carry-in or carry-out of the reagent bottle 12 through the reagent carrying-in position 31B interferes with the operation of the reagent dispensing mechanisms 7 and 8 or the reagent disk 11B, it is desirable that the operation parameters be set such that the gripper mechanism 21 moves to the waiting position provided around the reagent carrying-in position 31B and waits, and moves from the waiting position after the operation of the reagent dispensing mechanisms 7 and 8 and the reagent disk 11B is stopped, and performs the carry-in or the carry-out of the reagent bottle 12.

Here, since each of the reagent disks 11A and 11B is able to store the reagent bottle 12 in a double circle shape on the inner peripheral side and the outer peripheral side, it is desirable that each of the waiting positions set around the reagent carrying-in positions 31A and 31B have two positions of a first waiting position for the inner periphery and a second waiting position for the outer periphery different from the first waiting position.

In addition, it is desirable that the gripper mechanism 21 wait at the first waiting position when carrying in or carrying out the reagent bottle 12 to and from the inner peripheral side of the reagent disks 11A and 11B, and wait at the second waiting position when carrying in or carrying out the reagent bottle 12 to and from the outer peripheral side of the reagent disks 11A and 11B.

The same applies to the carry-out. When the carry-out of the reagent bottle interferes with the operation of the reagent dispensing mechanisms 7 and 8 or the reagent disks 11A and 11B, it is desirable that the gripper mechanism 21 move to the waiting position provided around the reagent carrying-in positions 31A and 31B and wait, move from the waiting position at a timing at which the operation of the reagent dispensing mechanisms 7 and 8 and the reagent disks 11A and 11B is stopped, such as cleaning of the reagent dispensing mechanisms 7 and 8, and interfere does not occur therebetween, and quickly carry out the reagent bottle 12, and then move to the reagent bottle gripping position 43a.

Next, an arrangement position of the reagent holding unit 40 with respect to the box 50 will be described with reference to Fig. 9 and the like.

The reagent holding unit 40 is detachable from the box 50, and as shown in Figs. 1 and 4, the reagent holding unit 40 is biased such that an end portion of the reagent holding unit 40 in the most negative direction of the X direction is positioned on an end portion side of the box 50 in the most negative direction of the X direction, which is the longitudinal direction on the front side of the box 50. In addition, as shown in Figs. 5 and 9, the reagent holding unit 40 is arranged on an upper side of the box 50.

Accordingly, the reaction disk 1 which holds the reaction container 2 is provided on the positive direction side of the X direction, which is an end portion side opposite to the side where the reagent holding unit 40 is arranged, and a consumables setting position 55 is provided on a front side of the same end portion side.

As shown in Fig. 1, the driving motor 21b that drives the gripper mechanism 21 is provided on the Y-direction moving shaft 23A side where the reagent holding unit 40 is arranged. In addition to the driving motor 21b that drives the gripper mechanism 21, it is desirable to arrange a control board of the driving motor 21b and an electric board of another mechanism on an upper side of the box 50 on the Y-direction moving shaft 23A side, particularly on a rear upper side of the box 50, which is on the Y-direction positive side of the Y-direction moving shaft 23A.

Although the case where the reagent holding unit 40 is biased to the X-direction negative side among end portions on the Y-direction negative side is described, the reagent holding unit 40 may be biased to the X-direction positive side among the end portions on the Y-direction negative side. In this case, it is desirable that the reagent holding unit 40 is biased to the X-direction positive side, and the reaction disk 1 and the like are biased to the positive direction side of the X direction.

Next, a time chart of the carry-in of the reagent bottle 12 according to the embodiment will be described with reference to Fig. 10.

As shown in Fig. 10, in a 0-th cycle in which the reagent bottle 12 to be carried into the reagent carrying tray 41 is installed and the reagent load button 46 is pressed, first, the target reagent dispensing mechanisms 7, 8, 9, and 10 for discharging a reagent to the target reaction container 2 move from the positions of the cleaning tanks 17, 18, 19, and 20 to the reagent aspiration positions 30A and 30B (step S101), and the reagent disks 11A and 11B rotate such that the reagent bottle 12 containing the reagent to be aspirated is positioned directly below the reagent aspiration positions 30A and 30B (step S102). Thereafter, the rotation operation of the reagent disks 11A and 11B is stopped at an appropriate timing. At the appropriate timing after the reagent disks 11A and 11B are stopped, the dispensing probes 7C and 8C are lowered to aspirate the reagent, and then elevated.

In Fig. 10, other mechanisms including the sample dispensing mechanisms 13 and 14 are omitted from the chart because physical interference is not assumed. Elevation and lowering operations of the operations of the reagent dispensing mechanisms 7, 8, 9, and 10 are omitted because interference is not assumed, and only a horizontal operation is shown.

After step S101 or step S102, the reagent carrying tray 41 is moved from the reagent putting-in position 41a to a position immediately below the piercing mechanism 26 (step S103), and then the pierce 26a of the piercing mechanism 26 is lowered to penetrate the lid 44 of the reagent bottle 12 to be carried in and is opened (step S104) .

Thereafter, the reagent dispensing mechanisms 7, 8, 9, and 10 move from the aspiration position to the reagent discharging positions 33A and 33B (step S105) to discharge the reagent into the reaction container 2, and the reagent carrying tray 41 moves from the position immediately below the piercing mechanism 26 to the reagent bottle gripping position 43a (step S106). The gripper mechanism 21 moves in the X-Y direction from the waiting position toward the reagent bottle gripping position 43a (step S107). In the 0-th cycle, the shutter mechanisms 32A and 32B remain closed.

Next, in a first cycle, the reagent disks 11A and 11B are rotated such that a storage position of the reagent bottle 12 to be carried in moves to a position directly below the reagent carrying-in positions 31A and 31B (step 5111), and the gripper mechanism 21 moves in a Z-direction negative direction from an upper limit position to the reagent bottle gripping position 43a (step S112) to grip the reagent bottle 12. Thereafter, the rotation operation of the reagent disks 11A and 11B is stopped at an appropriate timing.

At a timing after that, the reagent dispensing mechanisms 7, 8, 9, and 10 after discharging the reagent move from the position of the reaction container 2 to a cleaning position (step S113). The gripper mechanism 21 moves in a Z-direction positive direction from the reagent bottle gripping position 43a to the upper limit position (step S114) .

In a second cycle, first, the gripper mechanism 21 moves in the X-Y direction from the reagent bottle gripping position 43a to the reagent carrying-in positions 31A and 31B (step S121), and the reagent carrying tray 41 moves from the reagent bottle gripping position 43a to the reagent putting-in position 41a (step S122) .

After the gripper mechanism 21 moves to the reagent carrying-in positions 31A and 31B, the shutter mechanisms 32A and 32B open (step S123), the gripper mechanism 21 moves in the Z-direction negative direction from the upper limit position to the reagent putting-in position 41a (step S124), and the reagent bottle 12 is put in. Thereafter, the gripper mechanism 21 moves in the Z-direction positive direction from the reagent putting-in position 41a to an upper limit point position (step S125). The shutter mechanisms 32A and 32B are closed after a timing at which interference does not occur in the gripper mechanism 21.

In a third cycle, the target reagent dispensing mechanisms 7, 8, 9, and 10 for discharging a reagent to the next target reaction container 2 move from the positions of the cleaning tanks 17, 18, 19, and 20 to the reagent aspiration positions 30A and 30B (step S131), and the reagent disks 11A and 11B rotate such that the reagent bottle 12 containing the reagent to be aspirated is positioned directly below the reagent aspiration positions 30A and 30B (step S132) . The gripper mechanism 21 moves in the X-Y direction from the reagent carrying-in positions 31A and 31B to the waiting position (step S133) .

In the carry-in processing, as shown in Fig. 1 and the like, a distance between the reagent carrying tray moving position 43 and the reagent carrying-in position 31A and a distance between the reagent carrying tray moving position 43 and the reagent carrying-in position 31B are set to be as short as possible and are set to be equal to each other, and therefore, even when a putting-in request of the reagent bottle 12 is biased in one of the reagent disks 11A and 11B, an analysis waiting time is shorter than before and is constant.

Basically, the gripper mechanism 21 can be operated without depending on the operation of the reagent dispensing mechanisms 7, 8, 9, and 10 and the operation of the piercing mechanism 26 in each cycle.

Next, a time chart of the carry-out of the reagent bottle 12 according to the embodiment will be described with reference to Fig. 11.

As shown in Fig. 11, in a 0-th cycle, the gripper mechanism 21 moves in the X-Y direction from the waiting position to the reagent putting-in position 41a (step S201), and the reagent carrying tray 41 moves from the reagent putting-in position 41a to the reagent bottle gripping position 43a (step S202). Thereafter, the gripper mechanism 21 moves in the Z-direction negative direction from the upper limit point position to the reagent putting-in position 41a (step S203), and the closed shutter mechanisms 32A and 32B are opened (step S204), and a gripping operation of the reagent bottle 12 to be carried out is executed.

Thereafter, the gripper mechanism 21 moves in the Z-direction positive direction from the reagent putting-in position 41a to the upper limit point position (step S205), and the shutter mechanisms 32A and 32B are closed at an appropriate timing.

In a first cycle, the gripper mechanism 21 gripping the reagent bottle 12 to be carried out moves in the X-Y direction from the reagent putting-in position 41a to the reagent bottle gripping position 43a (step S211). The reagent disks 11A and 11B rotate such that the reagent bottle 12 containing the reagent to be aspirated in the corresponding cycle is positioned directly below the reagent aspiration positions 30A and 30B (step S212), and then the reagent dispensing mechanisms 7, 8, 9, and 10 move from the positions of the cleaning tanks 17, 18, 19, and 20 to the reagent aspiration positions 30A and 30B (step S213). After the rotation of the reagent disks 11A and 11B is stopped, the reagent is aspirated.

Next, the gripper mechanism 21 moves in the Z-direction negative direction from the upper limit point position toward the reagent bottle gripping position 43a to place the reagent bottle 12 to be carried out in an empty portion of the reagent carrying tray 41 (step S214), and the reagent dispensing mechanisms 7, 8, 9, and 10 move from the aspiration position to the reagent discharging positions 33A and 33B (step S215) to discharge the reagent to the reaction container 2.

In a second cycle, the gripper mechanism 21 moves in the Z-direction positive direction from the reagent bottle gripping position 43a to the upper limit point position (step S221), and the reagent disks 11A and 11B rotate (step S222) and then stop at an appropriate timing.

Next, after the reagent dispensing mechanisms 7, 8, 9, and 10 after discharging the reagent move from the position of the reaction container 2 to the cleaning position (step S223), the gripper mechanism 21 moves in the X-Y direction from the reagent bottle gripping position 43a toward the waiting position (step S224).

Thereafter, the reagent carrying tray 41 moves from the reagent bottle gripping position 43a to the reagent putting-in position 41a (step S225), and the reagent carrying mechanism cover 45 is opened to enable the taking out of the reagent bottle 12 to be carried out.

In a third cycle, the reagent disks 11A and 11B rotate such that the reagent bottle 12 containing the reagent to be aspirated next is positioned directly below the reagent aspiration positions 30A and 30B (step S231).

When the reagent bottle 12 is carried out as shown in Fig. 11, the analysis waiting time is also shorter and tends to be constant than that in the related art even when a carry-out request of the reagent bottle 12 is biased in one of the reagent disks 11A and 11B. Basically, the gripper mechanism 21 can be operated without depending on the operation of the reagent dispensing mechanisms 7, 8, 9, and 10 and the operation of the piercing mechanism 26 in each cycle.

Next, effects of the embodiment will be described.

The automatic analyzer 100 in the embodiment described above includes the plurality of reagent dispensing mechanisms 7, 8, 9, and 10 that dispense a reagent from the reagent bottle 12 to the reaction container 2, the plurality of reagent disks 11A and 11B that store the reagent bottles 12, the reagent carrying-in positions 31A and 31B provided in the respective reagent disks 11A and 11B to put in the reagent bottle 12 into each of the plurality of reagent disks 11A and 11B, and a carrying mechanism that carries the reagent bottle 12 between the respective reagent carrying-in positions 31A and 31B and the reagent bottle gripping position 43a, and when the automatic analyzer 100 is viewed from a vertically upper side, the reagent bottle gripping position 43a is positioned between the plurality of reagent carrying-in positions 31A and 31B on a device front side of the automatic analyzer 100.

Since the reagent bottle gripping position 43a of the reagent carrying tray moving position 43 can be arranged in an empty space between the reagent disks 11A and 11B generated by providing the plurality of circular reagent disks 11A and 11B, a distance between the reagent carrying tray moving position 43 and the reagent carrying-in position 31A and a distance between the reagent carrying tray moving position 43 and the reagent carrying-in position 31B become smaller and are the same as those in the related art, and when the reagent bottle 12 is requested to be carried into or carried out of any of the reagent disks 11A and 11B of the reagent disk 11A and 11B, an analysis waiting time is also shorter than that in the related art and becomes constant, and an installation area of the device can be reduced. Therefore, it is possible to reduce the burden on the operator required to carry in and carry out the reagent while preventing degradation in throughput of the device. Since the reagent bottle gripping position 43a can be arranged on the device front side, maintenance of the related configuration is easy, and the burden on the operator can be reduced.

Similarly, when the automatic analyzer 100 is viewed from the vertically upper side, since the position of the reagent bottle gripping position 43a in the longitudinal direction of the box 50 of the automatic analyzer 100 is between the plurality of reagent carrying-in positions 31A and 31B, the reagent bottle gripping position 43a of the reagent carrying tray moving position 43 can be arranged in the empty space between the reagent disks 11A and 11B generated by providing the plurality of circular reagent disks 11A and 11B, and effects the same as the above-described effects can be expected.

In addition, since the reagent putting-in position 41a where the operator puts in the reagent bottle 12, and the reagent holding unit 40 having the reagent carrying tray 41 that carries the reagent bottle 12 along an arrangement direction of the plurality of reagent disks 11A and 11B between the reagent putting-in position 41a and the reagent bottle gripping position 43a, are further provided, by installing a mechanism of performing processing such as reading of information or opening after the reagent bottle 12 which is not subjected to processing such as opening is installed at the reagent putting-in position 41a, the processing to be performed when the operator puts in the reagent bottle 12 can be only the putting-in operation, and the burden on the operator can be reduced. In addition, a carrying direction of the reagent carrying tray 41 is limited, and complication of the mechanism can be prevented.

Further, the reagent carrying tray 41 is arranged on the front side of the automatic analyzer 100, and the reagent carrying-in positions 31A and 31B are arranged on the sides of the respective reagent disks 11A and 11B where the reagent carrying tray 41 is arranged, and therefore, a carrying distance of the reagent bottle 12 is further shortened, and putting-in and carry-out operations are fairly easy because putting-in and taking-out positions of the reagent bottle 12 are on the device front side, and the burden on the operator can be more effectively reduced.

In addition, since the carrying mechanism includes the gripper mechanism 21 which can operate in any of the X direction as one direction of the box 50, the Y direction orthogonal to the X direction, and the Z direction as a vertical direction, a carrying path to the reagent carrying tray moving position 43 and the reagent carrying-in positions 31A and 31B can be freely set three-dimensionally, and thus it is possible to more easily implement the carrying path in a shorter distance while avoiding interference with other mechanisms.

Further, the reagent holding unit 40 and the carrying mechanism carry the reagent bottle 12 to the reagent disks 11A and 11B without rotating the reagent bottle 12, and therefore, it is not necessary to provide a mechanism required for rotation, and the configuration can be simplified.

By further including the piercing mechanism 26 which is arranged between the reagent putting-in position 41a and the reagent bottle gripping position 43a and opens the reagent bottle 12, opening processing in which exposure of the reagent to an atmosphere is reduced to a necessary minimum level can be automatically performed.

Further, the carrying mechanism includes the gripper mechanism 21 that holds the reagent bottle 12, and the piercing mechanism 26 and the gripper mechanism 21 are arranged such that the reagent bottle 12 and the piercing mechanism 26 do not interfere with each other in a height direction in a state in which the gripper mechanism 21 holds the reagent bottle 12, and when the gripper mechanism 21 carries the reagent bottle 12 between the reagent bottle gripping position 43a and one reagent carrying-in position 31A of the plurality of reagent carrying-in positions 31A and 31B, the gripper mechanism 21 passes above the piercing mechanism 26, and therefore, it is not necessary to increase a trajectory to be taken by the gripper mechanism 21 more than necessary in the X direction and the Y direction in Fig. 1 in order to avoid the opening mechanism such as the piercing mechanism 26, and the carrying time can be shortened.

When the automatic analyzer 100 is viewed from the vertically upper side, since the reagent bottle gripping position 43a is arranged such that a distance thereof from the middle line LC positioned in the middle of the straight lines LA1 and LB1 passing through the centers of the reagent disks 11A and 11B in parallel to the short direction (Y direction) of the box 50 is set within a range of 10% or less of the distance from the middle line LC to the respective straight lines LA1 and LB1, a distance between the reagent carrying tray moving position 43 and the reagent carrying-in position 31A, and a distance between the reagent carrying tray moving position 43 and the reagent carrying-in position 31B can be made the same.

Further, the shutter mechanisms 32A and 32B for opening and closing the reagent carrying-in positions 31A and 31B are further provided, and in the shutter mechanisms 32A and 32B, the shutter mechanism driving motors 32A1 and 32B1 are arranged on an end portion side of the box 50 with respect to the reagent carrying-in positions 31A and 31B, and therefore, risk of the shutter mechanisms 32A, 32B interfering with the reagent dispensing mechanisms 7, 8, 9, 10 can be further reduced.

The reagent holding unit 40 includes the reagent carrying mechanism cover 45 at the reagent putting-in position 41a, and the cover opening and closing motor 27 for opening and closing the reagent carrying mechanism cover 45, and when the reagent load button 46 or the reagent unload button 47 is pressed, the cover opening and closing motor 27 is driven to open the reagent carrying mechanism cover 45, and the reagent carrying tray 41 is moved to the position of the reagent putting-in position 41a, and when the reagent load button 46 or the reagent unload button 47 is pressed again, the cover opening and closing motor 27 is driven to close the reagent carrying mechanism cover 45, and the reagent carrying tray 41 is moved to the reagent bottle gripping position 43a, and therefore, it is possible to further reduce the work of the operator for carrying in and carrying out the reagent.

Further, when the gripper mechanism 21 interferes with the operations of the reagent dispensing mechanisms 7, 8, 9, and 10 and the reagent disks 11A and 11B when carrying in or carrying out the reagent bottle 12 through the reagent carrying-in positions 31A and 31B, the gripper mechanism 21 is set to move to a waiting position provided around the reagent carrying-in positions 31A and 31B and wait, and move from the waiting position after the operation of the reagent dispensing mechanisms 7, 8, 9, and 10 and the reagent disks 11A and 11B is stopped, and perform carry-in or carry-out of the reagent bottle 12, and therefore, the carry-in and the carry-out of the reagent bottle 12 to and from the reagent disks 11A and 11B can be performed more efficiently, and the analysis waiting time can be further shortened.

The reagent disks 11A and 11B having the reagent carrying-in positions 31A and 31B can store the reagent bottles 12 on the inner periphery and the outer periphery. The waiting position has a first waiting position for the inner periphery and a second waiting position for the outer periphery different from the first waiting position. The gripper mechanism 21 waits at the first waiting position when the carry-in or the carry-out of the reagent bottle 12 is performed on the inner periphery, and waits at the second waiting position when the carry-in or the carry-out of the reagent bottle 12 is performed on the outer periphery, and therefore, more reagent bottles 12 can be stored, and in such a case, the reagent bottles 12 can also be efficiently carried in or carried out.

Further, since the reagent holding unit 40 is arranged on an upper portion of the box 50, and is biased toward an end portion on any one side in one direction of the box 50, the reagent carrying tray moving position 43 can be easily arranged in a central portion of the box 50 of the device, and an effect that a space in the device can be more effectively used can be obtained, and a size of the device can be reduced.

The carrying mechanism includes the gripper mechanism 21 that holds the reagent bottle 12, and when one direction of the box 50 is defined as the X direction, the box 50 has the Y-direction moving shafts 23A and 23B that operate the gripper mechanism 21 in the Y direction orthogonal to the X direction on both end portion sides of the box 50, and by providing the driving motor 21b that drives the gripper mechanism 21 on a side of the Y-direction moving shafts 23A and 23B where the reagent holding unit 40 is arranged, the driving motor 21b can be arranged in a place where there is enough space, such that the space can be effectively used and the size can be easily reduced.

Further, since the reagent holding unit 40 is detachable from the box 50, an installation area of the device depends on the size of the box 50 regardless of the reagent holding unit 40, and the work such as the carry-in of the automatic analyzer 100 can be facilitated.

In addition, since the reaction disk 1 holding the reaction container 2 is provided on an end portion side opposite to the side where the reagent holding unit 40 is arranged, locations where the replacement work of the reaction container 2 and the replacement work of the dispensing probes 7C, 8C provided in the reagent dispensing mechanisms 7, 8, 9, 10 are required are intensively arranged, and therefore, the operator can easily access when performing maintenance, and usability can be improved.

Further, since the consumables setting position 55 is provided on a front side of the end portion side opposite to the side where the reagent holding unit 40 is arranged, the consumables setting position 55 such as a detergent bottle in a lower portion of the box 50 and locations requiring operator maintenance such as a syringe unit can be easily accessed and the access can be performed regardless of presence or absence of the reagent holding unit 40, and thus usability can be improved.

The control board of the driving motor 21b is provided on the side where the reagent holding unit 40 is arranged, and the driving motor 21b and the control board are arranged on the upper side of the box 50, and therefore, a wiring from the control board to the driving motor 21b can be shortened, and risk of pinching such as disconnection or failure during manufacturing can be reduced. In addition, an empty space is defined on a lower side of a plate forming the upper surface of the box 50, which is already arranged in the related art, and a degree of freedom in design can be improved.

Further, the gripper mechanism 21 moves the reagent bottle 12 to the waiting position while the reagent dispensing mechanisms 7, 8, 9, and 10 are being driven, thereby executing an operation in a range that can be executed within a range in which interference does not occur when the reagent bottle 12 is carried in or carried out of the reagent disks 11A and 11B, and thus the carry-in or the carry-out can be completed more quickly.

Each of the plurality of reagent dispensing mechanisms 7, 8, 9, and 10 has the first arms 7A and 8A having the first rotation shafts 7D, 8D, 9D, and 10D and the second arms 7B and 8B having the second rotation shafts provided on the first arms 7A and 8A, and when the respective reagent dispensing mechanisms 7, 8, 9, and 10 aspirate the reagent at a predetermined position, since the reagent dispensing mechanisms 7, 8, 9, and 10 are arranged such that each of the second arms 7B and 8B covers the reagent carrying-in positions 31A and 31B, the reagent disks 11A and 11B can be arranged more closely, and a size of the entire device can be reduced. In addition, by enlarging the reagent disks 11A and 11B, the reagent dispensing mechanisms 7, 8, 9, and 10 can be implemented not to overlap each other, and a space above the disks can be effectively used.

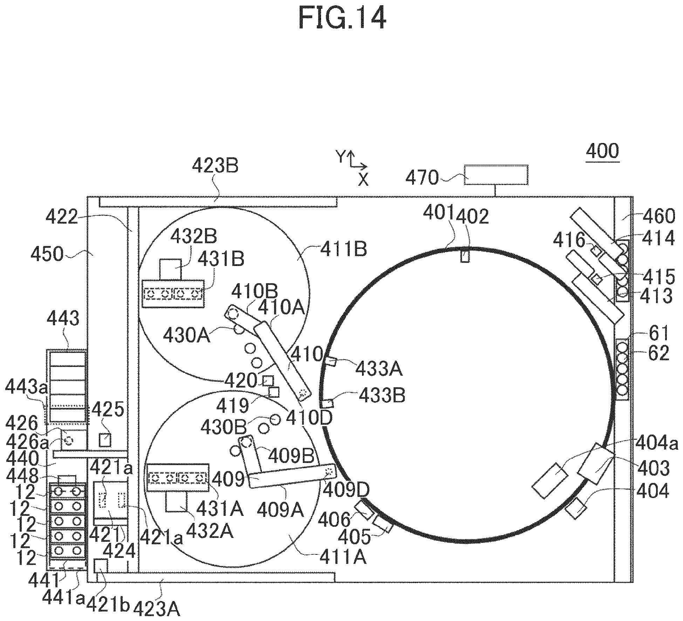

The invention is not limited to the configuration in which the reaction disk 1 is arranged on an outer peripheral side of the reagent disk 11B in Fig. 1, and the reaction disk 1 can be separately arranged on the Y-direction positive side with respect to the reagent disks 11A and 11B in Fig. 1, that is, an automatic analyzer 400 according to a fourth embodiment shown in Fig. 14 to be described later can be rotated counterclockwise by 90 degrees, and a side where a reagent holding unit 440 is provided can be set as the device front side.

### <Second Embodiment>

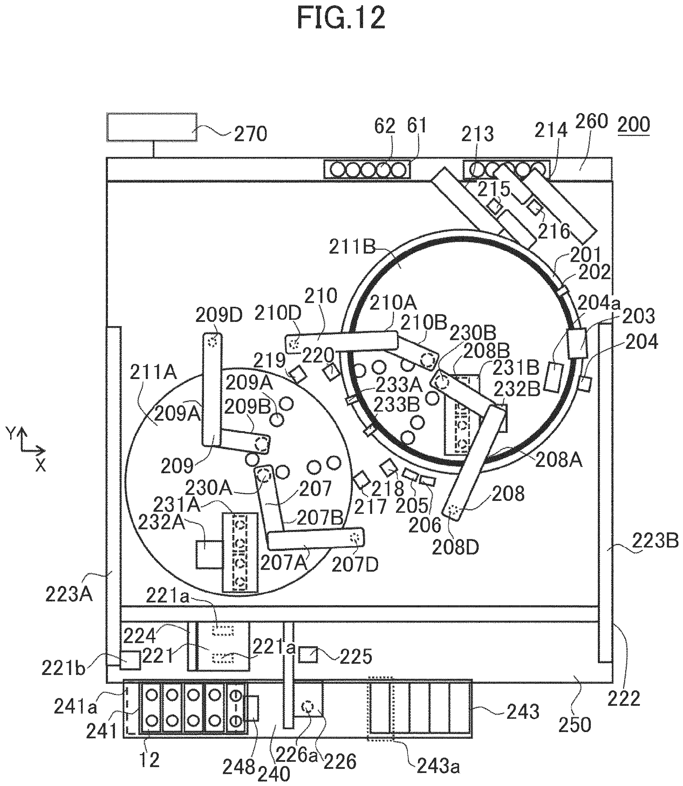

An automatic analyzer according to a second embodiment of the invention will be described with reference to Fig. 12. Fig. 12 is a schematic view showing a configuration of the automatic analyzer according to the embodiment.

As shown in Fig. 12, an automatic analyzer 200 in the embodiment is the same as the automatic analyzer 100 in the first embodiment in that, when the automatic analyzer 200 is viewed from a vertically upper side, a reagent bottle gripping position 243a is between a plurality of reagent carrying-in positions 231A and 231B on a device front side of the automatic analyzer 200 such that a reagent carrying tray moving position 243 and the respective reagent carrying-in positions 231A and 231B are at a distance as short as possible and at a distance close to each other in a range in which a difference does not occur in a movement cycle.

A difference is that a box 250 has a substantially square shape, and reagent disks 211A and 211B are arranged side by side not in the longitudinal direction of the device but in a longest oblique direction.

Reference numerals of the respective configurations of the automatic analyzer 200 shown in Fig. 12 indicate the reference numerals of the respective configurations of the automatic analyzer 100 in the first embodiment shown in Fig. 1 in 200 series, and since the configurations, operations, and the like thereof are basically the same, detailed description thereof will be omitted.

The automatic analyzer 200 according to the second embodiment of the invention can also achieve substantially the same effect as the automatic analyzer 100 according to the first embodiment described above.

### <Third Embodiment>

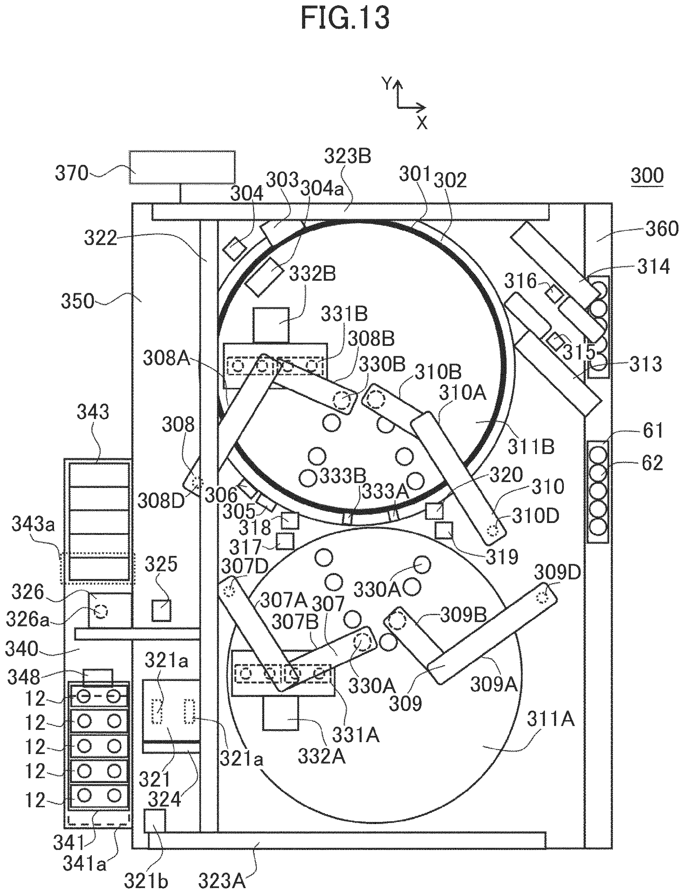

An automatic analyzer according to a third embodiment of the invention will be described with reference to Fig. 13. Fig. 13 is a schematic view showing a configuration of the automatic analyzer according to the embodiment.

An automatic analyzer 300 in the embodiment shown in Fig. 13 is the same as the automatic analyzer 100 in the first embodiment in that, when the automatic analyzer 300 is viewed from a vertically upper side, a position of a reagent bottle gripping position 343a in a longitudinal direction of a box 350 of the automatic analyzer 300 is arranged between a plurality of reagent carrying-in positions 331A and 331B such that a reagent carrying tray moving position 343 and the respective reagent carrying-in positions 331A and 331B are at a distance as short as possible and at a distance close to each other in a range in which a difference does not occur in a movement cycle.

A difference is that, in the embodiment, the X direction is a short direction of the box 350 of the automatic analyzer 300, and the Y direction is orthogonal to the X direction and is the longitudinal direction of the box 350.

In addition, in Fig. 13, a reagent holding unit 340 is not provided on a device front side of the box 350 of the automatic analyzer 300, but is biased to a most negative direction side of the Y direction among end portions in a most negative direction of the X direction, and a carrying direction of the reagent bottle 12 in the reagent holding unit 340 is a Y-direction positive direction or a Y-direction negative direction.

Reference numerals of the respective configurations of the automatic analyzer 300 shown in Fig. 13 indicate the reference numerals of the respective configurations of the automatic analyzer 100 in the first embodiment shown in Fig. 1 in 300 series, and since the configurations, operations, and the like thereof are basically the same, detailed description thereof will be omitted.

In the automatic analyzer 300 according to the third embodiment of the invention, substantially the same effect can be obtained except for the effect of facilitating maintenance of the related configuration obtained by arranging the reagent bottle gripping position 43a on the device front side according to the automatic analyzer 100 in the first embodiment.

### <Fourth Embodiment>

An automatic analyzer according to a fourth embodiment of the invention will be described with reference to Fig. 14. Fig. 14 is a schematic view showing a configuration of the automatic analyzer according to the embodiment.

The automatic analyzer 400 in the embodiment shown in Fig. 14 is different from those in the first to third embodiments in that reagent disks 411A and 411B are arranged side by side in a short direction, not in a longitudinal direction, of a box 450 of the automatic analyzer 400.

Similarly to the third embodiment, in Fig. 14, a reagent holding unit 440 is not provided on a device front side of the box 450 of the automatic analyzer 400, but is biased to a most negative direction side of the Y direction among end portions on a most negative direction side of the X direction, and a carrying direction of the reagent bottle 12 in the reagent holding unit 440 is a Y-direction positive direction or a Y-direction negative direction.

Unlike the automatic analyzer 100 in the first embodiment and the automatic analyzer 200 in the second embodiment, the automatic analyzer 400 in the embodiment does not have the reagent bottle gripping positions 43a and 243a on the device front side of the automatic analyzers 100 and 200 between the plurality of reagent carrying-in positions 31A, 31B, 231A, and 231B when viewed from the vertically upper side. The reagent bottle gripping positions 43a and 343a are not arranged such that positions of the reagent bottle gripping positions 43a and 343a in the longitudinal direction of the boxes 50 and 350 of the automatic analyzers 100 and 300 are between the plurality of reagent carrying-in positions 31A, 31B, 331A, and 331B.

The automatic analyzer 400 in the embodiment includes a reagent putting-in position 441a for an operator to put in the reagent bottle 12, and a reagent holding unit 440 including a reagent carrying tray 441 for carrying the reagent bottle 12 along an arrangement direction of the plurality of reagent disks 411A and 411B between the reagent putting-in position 441a and the reagent bottle gripping position 443a.

The automatic analyzer 400 in the embodiment is the same as those in the first to third embodiments in that the reagent bottle gripping position 443a is arranged such that a reagent carrying tray moving position 443 and the respective reagent carrying-in positions 431A and 431B are at a distance as short as possible and at a distance close to each other within a range in which a difference does not occur in a movement cycle.

Reference numerals of the respective configurations of the automatic analyzer 400 shown in Fig. 14 indicate the reference numerals of the respective configurations of the automatic analyzer 100 in the first embodiment shown in Fig. 1 in 400 series, and since the configurations, operations, and the like thereof are basically the same, detailed description thereof will be omitted.

In the automatic analyzer according to the fourth embodiment of invention, substantially the same effects as those of the automatic analyzer in the first embodiment described above can also be obtained.

### <Others>

The invention is not limited to the above embodiments, and includes various modifications. The embodiments described above have been described in detail for easy understanding of the invention, and the invention is not necessarily limited to those including all the configurations described above.

A part of a configuration of an embodiment may be replaced with a configuration of another embodiment, and a configuration of an embodiment may also be added with a configuration of another embodiment. A part of a configuration of each embodiment may be added with, deleted by, or replaced with another configuration.

### Reference Signs List

1, 201, 301, 401: reaction disk
2, 202, 302, 402: reaction container
3, 203, 303, 403: cleaning mechanism
4, 204, 304, 404: spectrophotometer
4a, 204a, 304a, 404a: light source
5, 6, 205, 206, 305, 306, 405, 406: stirring mechanism
7, 8, 9, 10, 207, 208, 209, 210, 307, 308, 309, 310, 409, 410: reagent dispensing mechanism
7A, 8A, 9A, 10A, 207A, 208A, 209A, 210A, 307A, 308A, 309A, 310A, 409A, 410A: first arm
7B, 8B, 9B, 10B, 207B, 208B, 209B, 210B, 307B, 308B, 309B, 310B, 409B, 410B: second arm
7C, 8C, 307C, 308C: dispensing probe
7D, 8D, 9D, 10D, 207D, 208D, 209D, 210D, 307D, 308D, 309D, 310D, 409D, 410D: first rotation shaft
11A, 11B, 211A, 211B, 311A, 311B, 411A, 411B: reagent disk
12: reagent bottle
13, 14, 213, 214, 313, 314, 413, 414: sample dispensing mechanism
15, 16, 17, 18, 19, 20, 215, 216, 217, 218, 219, 220, 315, 316, 317, 318, 319, 320, 415, 416, 419, 420: cleaning tank
21, 221, 321, 421: gripper mechanism (carrying mechanism)
21a, 221a, 321a, 421a: gripping arm
21b, 221b, 321b, 421b: driving motor
22, 222, 322, 422: X-direction moving shaft
23A, 23B, 223A, 223B, 323A, 323B, 423A, 423B: Y-direction moving shaft
24, 224, 324, 424: Z-direction moving shaft
25, 225, 325, 425: pierce cleaning tank
26, 226, 326, 426: piercing mechanism (opening mechanism)
26a, 226a, 326a, 426a: pierce
27: cover opening and closing motor
30, 30A, 30A2, 30A3, 30A4, 30B, 230A, 230B, 330A, 330B, 430A, 430B: reagent aspiration position
30A1, 30B1: reagent aspiration position at most inner peripheral side
31A, 31B, 231A, 231B, 331A, 331B, 431A, 431B: reagent carrying-in position (putting-in portion)
32A, 32B, 232A, 232B, 332A, 332B, 432A, 432B: shutter mechanism
32A1, 32B1: shutter mechanism driving motor
32A2, 32B2: first joint member
32A3, 32B3: second joint member
32A4, 32B4: lid
32A5, 32B5: shaft
33A, 33B, 233A, 233B, 333A, 333B, 433A, 433B: reagent discharging position
40, 240, 340, 440: reagent holding unit
41, 241, 341, 441: reagent carrying tray
41a, 241a, 341a, 441a: reagent putting-in position (reagent putting-in port)
42: RFID tag
43, 243, 343, 443: reagent carrying tray moving position
43a, 243a, 343a, 443a: reagent bottle gripping position (reagent carrying position)
44: lid
45: reagent carrying mechanism cover (putting-in cover)
46: reagent load button
47: reagent unload button
48, 248, 348, 448: RFID tag reader
50, 250, 350, 450: box
55: consumables setting position
60, 260, 360, 460: sample carrying mechanism
61: rack
62: sample container
70, 270, 370, 470: controller
100, 200, 300, 400: automatic analyzer
GA1: horizontal operation area of gripper mechanism
GA2: height-direction operation area of gripper mechanism
LA1, LB1: straight line in parallel to side surface of device
LA2, LB2: second arm shaft
LC: middle line
RA: operation area of reagent dispensing mechanism
T1: distance of reagent disk from center
T2: setting range of reagent bottle gripping position

## Claims

1. An automatic analyzer of dispensing a sample and a reagent into a reaction container to measure a mixed liquid reacted and blended, comprising:
a plurality of reagent dispensing mechanisms that dispense the reagent from a reagent bottle into the reaction container;
a plurality of reagent disks that store the reagent bottles;
putting-in portions provided in the respective reagent disks to put in the reagent bottle to the respective reagent disks; and
a carrying mechanism that carries the reagent bottle between the respective putting-in portions and a reagent carrying position, wherein
when the automatic analyzer is viewed from a vertically upper side, the reagent carrying position is positioned between the plurality of putting-in portions on a device front side of the automatic analyzer.

2. The automatic analyzer according to claim 1, further comprising:
a reagent putting-in port where an operator puts in the reagent bottle; and
a reagent holding unit having a reagent carrying tray for carrying the reagent bottle along an arrangement direction of the plurality of reagent disks, between the reagent putting-in port and the reagent carrying position.

3. The automatic analyzer according to claim 2, wherein
the reagent carrying tray is arranged on the front side of the automatic analyzer, and
the putting-in portions are arranged on the sides having the reagent carrying tray positioned of the respective reagent disks.

4. The automatic analyzer according to claim 1, wherein
the carrying mechanism includes a gripper mechanism movable in any direction of an X direction as one direction of a box of the automatic analyzer, a Y direction orthogonal to the X direction, and a Z direction as a vertical direction.

5. The automatic analyzer according to claim 2, wherein
the reagent holding unit and the carrying mechanism carry the reagent bottle to the reagent disks without rotating the reagent bottle.

6. The automatic analyzer according to claim 2, further comprising:
an opening mechanism provided between the reagent putting-in port and the reagent carrying position for opening a cap of the reagent bottle.

7. The automatic analyzer according to claim 6, wherein
the carrying mechanism includes a gripper mechanism of holding the reagent bottle,
the opening mechanism and the gripper mechanism are arranged in such a way that when the gripper mechanism holds the reagent bottle, the reagent bottle does not interfere with the opening mechanism in a height direction, and
the gripper mechanism passes above the opening mechanism when the gripper mechanism carries the reagent bottle between the reagent carrying position and one putting-in portion of the plurality of putting-in portions.

8. The automatic analyzer according to claim 1, wherein
the reagent carrying position is arranged in that when the automatic analyzer is viewed from a vertically upper side, a distance from a middle line positioned in a middle of straight lines passing through centers of the respective reagent disks in parallel to an end surface of a box of the automatic analyzer to the reagent carrying position is within a range of 10% and less of the distance from the middle line to each of the straight lines.

9. The automatic analyzer according to claim 1, further comprising:
a shutter mechanism of opening and closing the putting-in portions, wherein
a shutter mechanism motor of the shutter mechanism is arranged on an end portion side further than the putting-in portions, within the box of the automatic analyzer.

10. The automatic analyzer according to claim 2, wherein
the reagent holding unit includes a putting-in port cover of the reagent putting-in port and a cover opening and closing motor for opening and closing the putting-in port cover,
when a reagent load button or a reagent unload button is pushed, the cover opening and closing motor is driven to open the putting-in port cover and the reagent carrying tray is moved to the position of the reagent putting-in port, and
when the reagent load button or the reagent unload button is pushed again, the cover opening and closing motor is driven to close the putting-in port cover and the reagent carrying tray is moved to the reagent carrying position.

11. The automatic analyzer according to claim 4, wherein
when the reagent bottle is carried in or carried out of the putting-in portion, the gripper mechanism is moved to a waiting position provided around the putting-in portion and waits there in a case of interfering with an operation of the reagent dispensing mechanism and the reagent disk, and after the operation of the reagent dispensing mechanism and the reagent disk stops, the gripper mechanism is moved from the waiting position to carry in or carry out the reagent bottle.

12. The automatic analyzer according to claim 11, wherein
the reagent disk having the putting-in portions is to store the reagent bottles in an inner periphery and an outer periphery,
the waiting position includes a first waiting position for the inner periphery and a second waiting position for the outer periphery different from the first waiting position, and
the gripper mechanism waits at the first waiting position when carrying in or carrying out the reagent bottle in the inner periphery, and waits at the second waiting position when doing the above in the outer periphery.

13. The automatic analyzer according to claim 2, wherein
the reagent holding unit is arranged in an upper portion in the box of the automatic analyzer and is biased toward one end portion of the box.

14. The automatic analyzer according to claim 13, wherein
the carrying mechanism includes a gripper mechanism of holding the reagent bottle,
when one direction of the box is defined as an X direction, Y-direction moving shafts for moving the gripper mechanism in the Y direction orthogonal to the X direction are arranged on the both end portion sides of the box, and a driving motor for driving the gripper mechanism is provided on the side where the reagent holding unit is arranged, of the both sides of the Y-direction moving shafts.

15. The automatic analyzer according to claim 13, wherein
the reagent holding unit is detachable from the box.

16. The automatic analyzer according to claim 13, wherein
a reaction disk for holding the reaction container is provided on an end portion side opposite to the side where the reagent holding unit is arranged.

17. The automatic analyzer according to claim 13, wherein
a consumables setting position is provided on the front side of the end portion side opposite to the side where the reagent holding unit is arranged.

18. The automatic analyzer according to claim 14, wherein
a control board of the driving motor is provided on the side where the reagent holding unit is arranged, and
the driving motor and the control board are arranged on an upper side of the box.

19. The automatic analyzer according to claim 11, wherein
the gripper mechanism moves the reagent bottle to the waiting position while the reagent dispensing mechanism is driven.

20. The automatic analyzer according to claim 1, wherein
each of the reagent dispensing mechanisms includes a first arm having a first rotation shaft and a second arm having a second rotation shaft provided in the first arm, and
when each of the reagent dispensing mechanisms aspirates a reagent at a predetermined position, each of the reagent dispensing mechanisms is arranged in such a way that the second arm covers the putting-in portion.

21. An automatic analyzer of dispensing a sample and a reagent into a reaction container to measure a mixed liquid reacted and blended, comprising:
a plurality of reagent dispensing mechanisms that dispense the reagent from a reagent bottle into the reaction container;
a plurality of reagent disks that store the reagent bottles;
putting-in portions provided in the respective reagent disks to put in the reagent bottle to the respective reagent disks; and
a carrying mechanism that carries the reagent bottle between the respective putting-in portions and a reagent carrying position, wherein
when the automatic analyzer is viewed from a vertically upper side, the reagent carrying position is located between the putting-in portions in a longitudinal direction of a box of the automatic analyzer.

22. An automatic analyzer of dispensing a sample and a reagent into a reaction container to measure a mixed liquid reacted and blended, comprising:
a plurality of reagent dispensing mechanisms that dispense the reagent from a reagent bottle into the reaction container;
a plurality of reagent disks that store the reagent bottles;
putting-in portions provided in the respective reagent disks to put in the reagent bottle to the respective reagent disks;
a carrying mechanism that carries the reagent bottle between the respective putting-in portions and a reagent carrying position;
a reagent putting-in port where an operator puts in the reagent bottle; and
a reagent holding unit having a reagent carrying tray for carrying the reagent bottle along an arrangement direction of the reagent disks between the reagent putting-in port and the reagent carrying position.

23. The automatic analyzer according to claim 22, wherein
the carrying mechanism includes a gripper mechanism movable in any direction of an X direction as one direction of the box of the automatic analyzer, a Y direction orthogonal to the X direction, and a Z direction as a vertical direction, and
when the reagent bottle is carried in or carried out of the putting-in portion, the gripper mechanism is moved to a waiting position provided around the putting-in portion and waits there in a case of interfering with an operation of the reagent dispensing mechanism and the reagent disk, and after the operation of the reagent dispensing mechanism and the reagent disk stops, the above mechanism is moved from the waiting position to carry in or carry out the reagent bottle.
